# EUROPÄISCHE PATENTANMELDUNG

(11) **EP 2 722 970 A2**
(43) Veröffentlichungstag der Anmeldung: **23.04.2014**
(21) Anmeldenummer: 13187640.1
(22) Anmeldetag: 08.10.2013
(51) Int. Cl.: H02K 1/27

(54) **Läuferanordnung für eine permanentmagneterregte elektrische Maschine**

(30) Priorität: 18.10.2012 DE 102012219017
(71) Anmelder: ROBERT BOSCH GMBH, 70442 Stuttgart (DE)
(72) Erfinder: Stubner, Armin, 77815 Buehl-Altschweier (DE); Evans, Steven Andrew, 77815 Buehl (DE); Demont, Stefan, 77815 Buehl (DE); Bsul, Jihad, 76344 Eggenstein-Leopoldshafen (DE); Martin, Norbert, 77855 Achern (DE)

(57) **Zusammenfassung**

Die Erfindung betrifft eine Läuferanordnung (4) für eine rotatorische elektrische Maschine (1), umfassend:
- mehrere Polschuhe (42), die jeweils durch einen Steg (43) an einem Rückschlussbereich (44) gehalten sind;
- einen ersten Permanentmagneten (71), der zwischen zwei Polschuhen (42) angeordnet ist und sich von dem Rückschlussbereich (44) in Richtung einer Außenfläche der Läuferanordnung (4) erstreckt; und
- einen zweiten Permanentmagneten (72), der zwischen zwei Polschuhen (42) angeordnet ist, so dass zwischen dem ersten Permanentmagneten (71) und dem zweiten Permanentmagneten (72) einer der Polschuhe (42) angeordnet ist,

wobei die Magnetisierungsrichtungen der Permanentmagnete (71, 72) in Anordnungsrichtung der Polschuhe (42) ausgerichtet sind; und wobei sich der zweite Permanentmagnet (72) von einer Position eines Übergangs zwischen dem sich an den ersten Permanentmagneten (71) anschließenden Polschuh (42) und dem den betreffenden Polschuh (42) haltenden Steg (43) in Richtung einer Außenfläche der Läuferanordnung (4) erstreckt.

## Beschreibung

### Technisches Gebiet

Die vorliegende Erfindung betrifft permanentmagneterregte elektrische Maschinen, insbesondere eine Läuferanordnung für eine derartige elektrische Maschine.

### Stand der Technik

Aus dem Stand der Technik sind Läuferanordnungen bekannt, die Polschuhe aufweisen, die ein durch Permanentmagnete erzeugtes Erregermagnetfeld in Richtung eines Luftspalts zu einer Statoranordnung bereitstellen. In einer Variante zur Anordnung der Permanentmagnete in der Läuferanordnung werden die Permanentmagnete mit ihrer Polrichtung parallel zur Bewegungsrichtung des Läufers angeordnet, so dass sich die Polschuhe der Läuferanordnung zwischen den Permanentmagneten befinden. In den Polschuhen wird das von den Permanentmagneten abgegebene Magnetfeld in Richtung des Luftspalts umgelenkt.

Derartige Typen von Läuferanordnungen werden heutzutage in vielen permanentmagneterregten elektrischen Maschinen verwendet, beispielsweise bei der Lenkunterstützung und in Kühleinrichtungen. Dabei werden im Wesentlichen quaderförmige Permanentmagnete verwendet, die einfach und mit geringem Aufwand herzustellen sind, wobei eine Magnetisierungsanisotropie und eine dazu gleichgerichtete Magnetisierungsrichtung in Richtung der Bewegung des Läufers bzw. in Anordnungsrichtung der Polschuhe ausgerichtet sind.

In rotatorischen elektrischen Maschinen wird eine derartige Anordnung der Permanentmagnete als Speichenanordnung bezeichnet. Die Polrichtung der Permanentmagnete verläuft in tangentialer Richtung.

Ein Vorteil von derartigen Läuferanordnungen besteht darin, dass durch eine geeignete Dimensionierung eine Luftspaltflussdichte erreicht werden kann, die größer als die Remanenzflussdichte der eingesetzten Permanentmagnete ist. Da die Luftspaltflussdichte maßgeblich die Drehmomentdichte der elektrischen Maschine bestimmt, können dadurch leistungsfähige elektrische Maschinen mit relativ hohen Drehmomentdichten aufgebaut werden.

Dies wird dadurch erreicht, dass die Anzahl der Permanentmagnete in dem Rotor so gewählt ist, dass deren radiale Länge größer ist als die tangentiale Breite der Polschuhe zwischen den Permanentmagneten. Diese Anordnung konzentriert den magnetischen Fluss in den Luftspalt, um eine Luftspaltflussdichte zu erzeugen, die höher ist als die Remanenzflussdichte der Permanentmagnete.

Die obigen Läuferanordnungen werden oftmals in Kombination mit Permanentmagneten aus einfachem, kostengünstigem Magnetmaterial aufgebaut, insbesondere Magnetmaterial ohne Seltene-Erden-Verbindungen und mit relativ geringer Remanenzflussdichte, wie beispielsweise Permanentmagnete aus gesinterten Ferritmaterialien der sechsten Generation.

Permanentmagnete aus gesinterten Ferritmaterialien weisen darüber hinaus eine relativ geringe Koerzitivfeldstärke auf, so dass bei einem gegenläufigen Magnetfeld ausreichend hoher Feldstärke die Gefahr einer Entmagnetisierung besteht. Um diese relativ geringe Koerzitivität zu kompensieren, sind die Permanentmagnete in der Richtung ihrer Materialanisotropie und ihrer Magnetisierung relativ dick ausgeführt, um sie widerstandsfähiger gegen eine Entmagnetisierung durch das Statorfeld der elektrischen Maschine zu machen.

Weiterhin sind bei der oben beschriebenen Läuferanordnung zwei Luftspalte in dem Flusspfad eines Permanentmagneten vorgesehen. Um dennoch eine hohe Luftspaltflussdichte sowie eine hohe Widerstandsfähigkeit gegen eine Entmagnetisierung zu erreichen, werden daher die derart angeordneten Permanentmagnete häufig doppelt so dick (in Polungsrichtung) ausgebildet wie Permanentmagnete aus Ferritmaterial mit ihrer Polrichtung parallel zum Luftspaltmagnetfeld, die konstruktionsbedingt nur einen Luftspalt in ihrem jeweiligen Flusspfad aufweisen. Insbesondere bei rotatorischen elektrischen Maschinen mit einem bestimmten Rotordurchmesser und einer vorgegebenen Polzahl führt bei einer Speichenanordnung jede Erhöhung der Dicke der Permanentmagnete in tangentialer Richtung (Polungsrichtung) aufgrund des begrenzten Bauraums zu einer Verringerung ihrer maximal möglichen radialen Länge. Diese Beschränkung der radialen Länge der Permanentmagnete begrenzt den durch die Permanentmagnete bereitstellbaren magnetischen Fluss und verringert dadurch die Luftspaltflussdichte und die Drehmomentdichte der elektrischen Maschine.

Darüber hinaus führt jegliche Erhöhung der Dicke der Permanentmagnete zu einer Verringerung der Winkelabdeckung der einzelnen Polschuhe an dem Luftspalt der elektrischen Maschine und kann ebenfalls dazu führen, dass dieser Winkel kleiner ist als sein Optimum.

Es ist Aufgabe der vorliegenden Erfindung, eine Läuferanordnung für eine elektrische Maschine bereitzustellen, bei der trotz der Verwendung von kostengünstigen Permanentmagneten mit hoher Dicke in Magnetisierungsrichtung eine hohe Flussdichte im Luftspalt erreicht werden kann.

### Offenbarung der Erfindung

Diese Aufgabe wird durch die Läuferanordnung für eine elektrische Maschine gemäß Anspruch 1 sowie durch die elektrische Maschine gemäß dem nebengeordneten Anspruch gelöst.

Weitere vorteilhafte Ausgestaltungen der vorliegenden Erfindung sind in den abhängigen Ansprüchen angegeben.

Gemäß einem ersten Aspekt ist eine Läuferanordnung für eine rotatorische elektrische Maschine vorgesehen, umfassend:
- mehrere Polschuhe, die durch Stege an einem Rückschlussbereich gehalten sind;
- ein erster Permanentmagnet, der zwischen zwei Polschuhen angeordnet ist und sich von dem Rückschlussbereich in Richtung einer Außenfläche der Läuferanordnung erstreckt; und
- ein zweiter Permanentmagnet, der zwischen zwei Polschuhen angeordnet ist, so dass zwischen dem ersten Permanentmagneten und dem zweiten Permanentmagneten einer der Polschuhe angeordnet ist,
wobei die Magnetisierungsrichtungen der Permanentmagnete in Anordnungsrichtung der Polschuhe ausgerichtet sind und wobei sich der zweite Permanentmagnet von einer Position eines Übergangs zwischen dem sich an den ersten Permanentmagneten anschließenden Polschuh und dem den betreffenden Polschuh haltenden Steg in Richtung einer Außenfläche der Läuferanordnung erstreckt.

Eine Idee der obigen Läuferanordnung besteht darin, Permanentmagnete mit verschiedenen radialen Längen vorzusehen, so dass sich zumindest die ersten Permanentmagnete über den gesamten in radialer Richtung zur Verfügung stehenden Bauraum der Läuferanordnung erstrecken können. Dadurch können die in radialer Richtung längeren ersten Permanentmagnete zur Sättigung des magnetischen Flusspfads durch den magnetischen Rückschlussbereich in der Läuferanordnung beitragen, so dass der von den in radialer Richtung kürzeren zweiten Permanentmagneten bereitgestellte magnetische Fluss vollständig zu dem Luftspalt gelenkt werden kann.

Weiterhin können eine erste und eine zweite Tasche vorgesehen sein, um den ersten bzw. den zweiten Permanentmagneten aufzunehmen, so dass deren Polflächen an Seitenflächen der angrenzenden Polschuhe anliegen.

Es kann vorgesehen sein, dass der Steg zum Halten eines Polschuhs zwischen der ersten Tasche und der zweiten Tasche schräg zu einer radialen Richtung verläuft.

Weiterhin kann die zweite Tasche einen ersten radial äußeren Abschnitt zur Aufnahme eines quaderförmigen Permanentmagneten und einen zweiten radial inneren Abschnitt mit dreieckigem Querschnitt aufweisen.

Gemäß einer Ausführungsform kann der zweite Abschnitt der zweiten Tasche mit einem Permanentmagneten versehen sein, dessen Magnetisierungsrichtung des in dem ersten Abschnitt angeordneten Teils des Permanentmagneten in Richtung zu den Stegen ausgerichtet ist.

Alternativ kann vorgesehen sein, dass der zweite Abschnitt der zweiten Tasche mit einem Permanentmagneten versehen ist, dessen Magnetisierungsrichtung senkrecht zur Magnetisierung des in dem ersten Abschnitt angeordneten Teils des Permanentmagneten verläuft.

An den ersten Permanentmagneten können sich beidseitig Polschuhe anschließen, deren jeweils dem ersten Permanentmagneten gegenüberliegende Seitenfläche an die zweiten Permanentmagnete anschließt.

Mehrere erste Permanentmagnete und mehrere zweite Permanentmagnete können in einer abwechselnden Anordnung in Umfangsrichtung der Läuferanordnung vorgesehen sein, so dass jeweils einer der Polschuhe zwischen einem ersten und einem zweiten der Permanentmagnete angeordnet ist.

Vorteilhaft weisen die ersten Permanentmagnete eine größere Ausdehnung in Radialrichtung auf, als die zweiten Permanentmagnete, wobei beispielsweise sich die ersten und zweiten Permanentmagnete zur radialen Mitte des Läufers hin unterschiedlich weit erstrecken, und sich insbesondere zur Außenfläche der Läuferanordnung hin gleich weit radial erstrecken. Vorzugsweise weisen die ersten und zweiten Permanentmagnete eine gleiche Ausdehnung in Tangentialrichtung auf. Die Magnete sind besonders günstig als gesinterte Ferritmagnete herstellbar, beispielsweise Magnetmaterial der sogenannten sechsten oder zwölften Generation.

Gemäß einem weiteren Aspekt ist eine elektrische Maschine mit einer Statoranordnung zum Bereitstellen eines Statormagnetfelds und der obigen Läuferanordnung vorgesehen, wobei die Polschuhe der Läuferanordnung durch einen Luftspalt von der Statoranordnung getrennt sind. Die elektrische Maschine wird bevorzugt zum Verstellen beweglicher Teile im Kraftfahrzeug wie Fensterheber, Schiebedach oder im Fahrzeugsitz eingesetzt, kann aber auch für rotierende Teile wie Pumpen und Lüfter oder für den Antrieb von Fahrzeugen, insbesondere Zweiräder eingesetzt werden.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Querschnittsdarstellung durch eine elektrische Maschine; und
- Figur 2: eine vergrößerte Darstellung eines Ausschnitts durch zwei Polschuhe der Läuferanordnung der elektrischen Maschine der Figur 1 mit dargestellten magnetischen Feldlinien.

### Beschreibung von Ausführungsformen

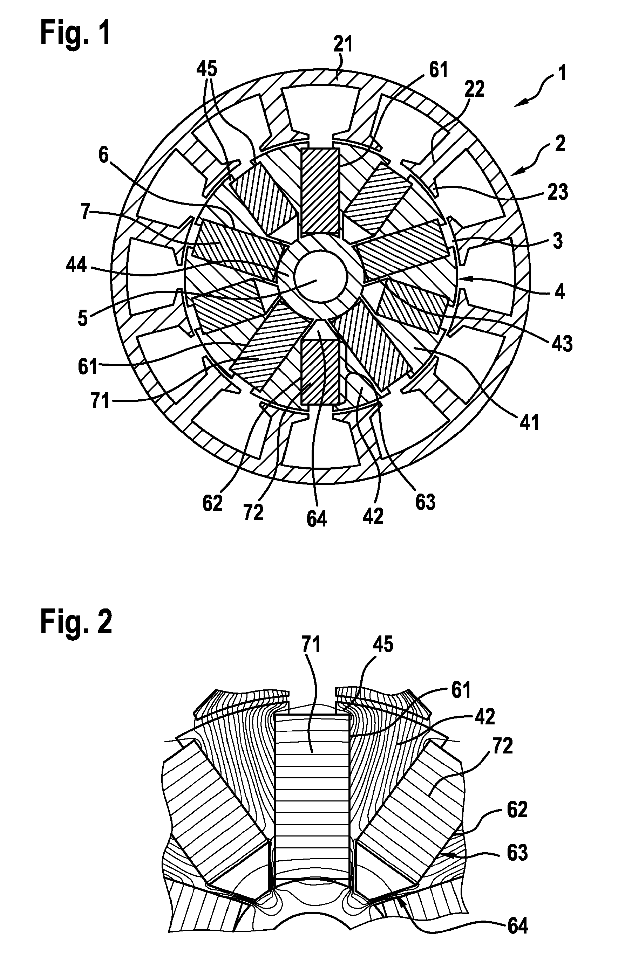

Figur 1 zeigt eine schematische Querschnittsdarstellung einer herkömmlichen rotatorischen, permanentmagneterregten elektrischen Maschine 1 mit einem Innenläufer. Die elektrische Maschine 1 weist einen zylinderförmigen Stator 2 auf.

Der Stator 2 umfasst einen zylinderförmigen magnetischen Statorrückschlussbereich 21, von dem äquidistant in Umfangsrichtung angeordnete Statorzähne 22 radial nach innen gerichtet abstehen und mit ihren nach innen gerichteten Enden eine ebenfalls zylinderförmige Innenausnehmung 3 definieren. Die Statorzähne 22 sind an ihren radial inneren Enden mit Zahnköpfen 23 versehen, die eine kreisbogenförmige, konkave Außenkontur aufweisen. Die Statorzähne 22 sind mit (nicht gezeigten) Statorspulen versehen, durch die bei Bestromung ein Statormagnetfeld erzeugt werden kann.

In der Innenausnehmung 3 ist als Läuferanordnung ein ebenfalls zylinderförmiger Rotor 4 (Läufer der elektrischen Maschine 1) drehbeweglich an einer Welle 5 angeordnet. Der Rotor 4 weist einen Rotorkörper 41 auf, der mit annähernd kreissegmentförmigen Polschuhen 42 versehen ist, die über Stege 43 mit einem die Welle 5 umgebenden Rückschlussbereich 44 verbunden sind.

Die Stege 43 sind vorzugsweise so dimensioniert, dass sie eine ausreichende mechanische Stabilität aufweisen, um die sich nach außen verbreiternden Polschuhe 42 gegen radial wirkende Zentrifugalkräfte sowie bei Beschleunigung oder Abbremsen des Motors in tangentialer Richtung wirkende Querkräfte zu halten. Des Weiteren sind die Stege 43 so dimensioniert, dass sie einen Querschnitt aufweisen, der ausreichend klein ist, um den durch die Permanentmagnete 7 bewirkten magnetischen Fluss durch den Rückschlussbereich 44 möglichst gering zu halten. Insbesondere ist es erforderlich, dass der Teil des magnetischen Flusses der Permanentmagnete 7, der durch die Stege 43 fließt, ausreicht, um die magnetische Flussdichte in den Stegen 43 in einer Sättigung zu halten.

Zwischen den Polschuhen 42 sind Taschen 6 angeordnet, in denen Permanentmagnete 7 aufgenommen sind. Um die Taschen 6 in radialer Richtung nach außen zu begrenzen, weisen die Polschuhe 42 Überstände 45 auf, die die in den Taschen 6 angeordneten Permanentmagnete 7 übergreifen und diese zuverlässig, auch gegen das Wirken von Zentrifugalkräften bei Drehung des Rotors 4, in den Taschen 6 zu halten. Die Taschen 6 weisen vorzugsweise eine Breite in tangentialer Richtung auf, um entsprechende Permanentmagnete 7 aufzunehmen, so dass diese mit ihren Polflächen an Seitenflächen der Polschuhe 42 anliegen.

Eine derartige elektrische Maschine 1 wird beispielsweise elektromotorisch betrieben, indem die Statorspulen so bestromt werden, dass ein umlaufendes Statormagnetfeld erzeugt wird, das mit dem von den Permanentmagneten 7 über die Polschuhe 42 bewirkten Erregermagnetfeld wechselwirkt und dadurch ein Drehmoment auf den Rotor 4 ausübt.

Die Permanentmagnete 7 werden üblicherweise durch Pressen von Ferritpulvermaterial hergestellt und anschließend gesintert, wobei dem Ferritmaterial während dem Pressen durch Beaufschlagen mit einem Magnetfeld eine Magnetisierungsanisotropie verliehen wird und anschließend eine Magnetisierung des gesinterten Materials in der Richtung der Anisotropie erfolgt. Die Permanentmagnete 7 werden vorzugsweise quaderförmig vorgesehen, mit ihrer Polrichtung in tangentialer Richtung, d. h. senkrecht zu den Grenzflächen zwischen den Polschuhen 42 und den Taschen 6.

Der Rotor 4 weist in Umfangsrichtung Taschen 6 mit zwei verschiedenen Querschnitten auf. Eine erste Tasche 61 erstreckt sich nahezu über die gesamte zur Verfügung stehende radiale Länge, d. h. von nahezu dem äußeren Rand des Rotors 4, insbesondere von den Überständen 45 bis hin zu dem Rückschlussbereich 44. Die erste Tasche 61 weist einen rechteckigen Querschnitt (quer zur axialen Richtung des Rotors 4) auf, um einen quaderförmigen ersten Permanentmagneten 71 aufnehmen zu können. Dies ermöglicht die Bereitstellung eines größtmöglichen magnetischen Flusses in die zu der ersten Tasche 61 benachbarten Polschuhe 42.

Es sind weiterhin zweite Taschen 62 vorgesehen, deren Querschnitt fünfeckig ist und die zu beiden Seiten (in tangentialer Richtung) neben den ersten Taschen 61 angeordnet sein können. Die zweiten Taschen 62 weisen zwei Abschnitte auf, und zwar zunächst einen ersten Abschnitt 63 mit einem rechteckigen Querschnitt, um einen entsprechend geformten zweiten Permanentmagneten 72 aufzunehmen. Der in die erste Tasche 61 eingesetzte erste Permanentmagnet 71 ist in radialer Richtung deutlich länger als der in den ersten Abschnitt 63 der zweiten Tasche 62 eingesetzte zweite Permanentmagnet 72. In Richtung des Rückschlussbereichs 44 schließt sich dann an den ersten Abschnitt 63 der zweiten Tasche 62 ein zweiter Abschnitt 64 an, der dazu dient, die erste und zweite Tasche 61, 62 voneinander zu trennen und einen dazwischenliegenden Steg 43 zu definieren.

Die zwischen den Taschen 61, 62 angeordneten Stege 43 weisen vorzugsweise einen Querschnitt auf, der ausreicht, um die mechanische Stabilität des Rotors 4 zu gewährleisten, insbesondere um Zug- und Querkräften bei einem normalen Betrieb der elektrischen Maschine standzuhalten. Die Querschnittsfläche der Stege 43 ist jedoch gleichzeitig gering genug, so dass ein dem Rückschlussbereich 44 zugewandter Abschnitt des ersten Permanentmagneten 71 dort einen magnetischen Fluss bewirken kann, der zur magnetischen Sättigung in den Stegen 43 führt.

Die durch die beiden Taschen 61, 62 gebildeten Stege 43 zum Halten der Polschuhe 42 verlaufen daher im Gegensatz zu herkömmlichen Läuferanordnungen nicht in radialer Richtung, sondern schräg dazu und ermöglichen es so, dass die ersten Taschen 61 bei vorgegebener Dicke eine größtmögliche Ausdehnung in radialer Richtung aufweisen können.

In Figur 2 ist der Verlauf des magnetischen Flusses durch die Polschuhe 42 und durch die Permanentmagnete 71, 72 anhand von Magnetfeldlinien näher dargestellt. Man erkennt, dass bei der Verwendung der beiden unterschiedlich geformten Taschen 61, 62 der dem Rückschlussbereich 44 zugewandte Teil des ersten Permanentmagneten 71 im Wesentlichen dazu dient, das Magnetfeld in den Stegen 43 zu sättigen, um so den von den zweiten Permanentmagneten 72 und den dem Luftspalt zugewandten Abschnitten der ersten Permanentmagnete 71 bewirkten magnetischen Fluss in Richtung des Luftspalts zu lenken. Die Anordnung der ersten und zweiten Taschen 61, 62 entspricht in der gezeigten Ausführungsform einer abwechselnden Anordnung, es kann jedoch auch vorgesehen sein, mehr als eine zweite Tasche 62 nebeneinander anzuordnen. Es muss lediglich gewährleistet sein, dass die zu einer ersten Tasche 61 benachbarten Taschen die Form der zweiten Taschen 62 aufweisen.

## Patentansprüche

1. Läuferanordnung (4) für eine rotatorische elektrische Maschine (1), umfassend:
- mehrere Polschuhe (42), die jeweils durch einen Steg (43) an einem Rückschlussbereich (44) gehalten sind;
- einen ersten Permanentmagneten (71), der zwischen zwei Polschuhen (42) angeordnet ist und sich von dem Rückschlussbereich (44) in Richtung einer Außenfläche der Läuferanordnung (4) erstreckt; und
- einen zweiten Permanentmagneten (72), der zwischen zwei Polschuhen (42) angeordnet ist, so dass zwischen dem ersten Permanentmagneten (71) und dem zweiten Permanentmagneten (72) einer der Polschuhe (42) angeordnet ist,
wobei die Magnetisierungsrichtungen der Permanentmagnete (71, 72) in Anordnungsrichtung der Polschuhe (42) ausgerichtet sind; und
wobei sich der zweite Permanentmagnet (72) ausgehend von einer Position eines Übergangs zwischen dem sich an den ersten Permanentmagneten (71) anschließenden Polschuh (42) und dem den betreffenden Polschuh (42) haltenden Steg (43) in Richtung einer Außenfläche der Läuferanordnung (4) erstreckt.

2. Läuferanordnung (4) nach Anspruch 1, wobei eine erste und eine zweite Tasche (61, 62) vorgesehen sind, um den ersten bzw. den zweiten Permanentmagneten (71, 72) aufzunehmen, so dass deren Polflächen an Seitenflächen der angrenzenden Polschuhe (42) anliegen, wobei insbesondere die ersten und/oder zweiten Permanentmagnete (71, 72) als gesinterte Ferritmagnete - und vorzugsweise quaderförmig - ausgebildet sind.

3. Läuferanordnung (4) nach Anspruch 2, wobei der Steg (43) zum Halten eines Polschuhs (42) zwischen der ersten Tasche (61) und der zweiten Tasche (62) schräg zu einer radialen Richtung verläuft.

4. Läuferanordnung (4) nach einem der Ansprüche 2 bis 3, wobei die zweite Tasche (62) einen ersten radial äußeren Abschnitt (63) zur Aufnahme eines quaderförmigen Permanentmagneten und einen zweiten radial inneren Abschnitt (64) mit näherungsweise dreieckigem Querschnitt aufweist.

5. Läuferanordnung (4) nach Anspruch 4, wobei der zweite Abschnitt (64) der zweiten Tasche (62) mit einem Permanentmagneten versehen ist, dessen Magnetisierungsrichtung des in dem ersten Abschnitt angeordneten Teils des Permanentmagneten in Richtung zu den Stegen (43) ausgerichtet ist.

6. Läuferanordnung (4) nach Anspruch 4, wobei der zweite Abschnitt (64) der zweiten Tasche (62) mit einem Permanentmagneten versehen ist, dessen Magnetisierungsrichtung senkrecht zur Magnetisierung des in dem ersten Abschnitt angeordneten Teils des Permanentmagneten verläuft.

7. Läuferanordnung (4) nach einem der Ansprüche 1 bis 6, wobei sich an den ersten Permanentmagneten (71) beidseitig Polschuhe (42) anschließen, deren jeweils dem ersten Permanentmagneten (71) gegenüberliegende Seitenfläche an die zweiten Permanentmagnete (72) anschließt.

8. Läuferanordnung (4) nach Anspruch 7, wobei mehrere erste Permanentmagnete (71) und mehrere zweite Permanentmagnete (72) abwechselnd in Umfangsrichtung der Läuferanordnung (4) angeordnet sind, so dass jeweils zwischen einem ersten und einem zweiten der Permanentmagnete (71, 72) einer der Polschuhe (42) angeordnet ist.

9. Läuferanordnung (4) nach einem der Ansprüche 1 bis 8, wobei die ersten Permanentmagnete (71) eine größere Ausdehnung in Radialrichtung aufweisen als die zweiten Permanentmagnete (72), wobei insbesondere sich die ersten und zweiten Permanentmagnete (71, 72) zur radialen Mitte des Läufers hin unterschiedlich weit erstrecken, und vorzugsweise die ersten und zweiten Permanentmagnete (71, 72) eine gleiche Ausdehnung in Tangentialrichtung aufweisen.

10. Elektrische Maschine (1) mit einer Statoranordnung (2) zum Bereitstellen eines Statormagnetfelds und einer Läuferanordnung (4) nach einem der Ansprüche 1 bis 8, wobei die Polschuhe (42) der Läuferanordnung (4) durch einen Luftspalt von der Statoranordnung (2) getrennt sind.
